# EUROPEAN PATENT APPLICATION

(11) **EP 3 364 393 A1**
(43) Date of publication of application: **22.08.2018**
(21) Application number: 17157001.3
(22) Date of filing: 20.02.2017
(51) Int. Cl.: G08G 1/16, B60Q 1/48, B60Q 1/52

(54) **A METHOD AND APPARATUS FOR SAFE OPERATION OF A VEHICLE**

(71) Applicant: Continental Automotive GmbH, 30165 Hannover (DE)
(72) Inventor: Padiri, Bhanu Prakash, 560037 Bangalore (IN)
(74) Representative: Bobbert, Christiana

(57) **Abstract**

A method and apparatus for safe operation of a vehicle comprising the steps of capturing (S1) images of the vehicle's surrounding by at least one camera of said vehicle; selecting (S2) an intended movement of said vehicle or an intended movement of at least one component of said vehicle based on the captured images; and communicating (S3) the intended movement to other traffic participants in the vehicle's surrounding.

## Description

The invention relates to a method and apparatus for safe operation of a vehicle and in particular for increasing safety of a vehicle when performing a parking maneuver.

In many traffic scenarios, an intended movement of a traffic participant such as a vehicle may come into conflict with movements of other traffic participants. A typical traffic situation is when a free parking space has been detected by a driver or a driver assistance system of a vehicle and the same parking space or parking lot has also been detected by another driver of another vehicle who wishes to park his vehicle in the same parking space.

Especially, when a semi-autonomous parking control system or a fully automated parking control system is implemented in the vehicles and there is a conflict between the intended movements of vehicles, it is necessary to avoid a collision between the traffic participants.

Accordingly, it is an object of the present invention to provide a method and an apparatus for safe operation of a vehicle in such traffic situations.

This object is achieved according to a first aspect of the present invention by a method for safe operation of a vehicle comprising the features of claim 1.

The invention provides according to a first aspect a method for safe operation of a vehicle comprising the steps of: capturing images of the vehicle's surrounding by at least one camera of the vehicle,
selecting an intended movement of the vehicle or an intended movement of at least one component of the vehicle based on the captured images and
communicating the intended movement to other traffic participants in the vehicle's surrounding.

In a possible embodiment of the method according to the first aspect of the present invention, the intended movement is communicated wireless via a vehicle to vehicle communication to other traffic participants in the vehicle's surrounding.

In a further possible embodiment of the method according to the first aspect of the present invention, the intended movement is communicated to other traffic participants in the vehicle's surrounding by generating associated optical signals.

In a further possible embodiment of the method according to the first aspect of the present invention, a track of the intended movement is communicated to the other traffic participants.

In a further possible embodiment of the method according to the first aspect of the present invention, an endpoint of the intended movement is selected manually by a user of the vehicle via a user interface and/or selected automatically by a control unit of said vehicle.

In a still further possible embodiment of the method according to the first aspect of the present invention, the endpoint of the intended movement is a parking lot selected manually or automatically on the basis of the captured images of the vehicle's surrounding.

In a further possible embodiment of the method according to the first aspect of the present invention, the generated optical signals comprise visible signals pointed at the selected endpoint and/or track of the intended movement of said vehicle and/or pointed at the selected endpoint and/or track of at least one component of said vehicle.

In a further possible embodiment of the method according to the first aspect of the present invention, the captured images are processed to detect other traffic participants in the vehicle's surrounding and/or to detect tracks of other traffic participants.

In a further possible embodiment of the method according to the first aspect of the present invention, the track of the intended movement of the vehicle is communicated to each detected other traffic participant in its surrounding.

In a still further possible embodiment of the method according to the first aspect of the present invention, the other traffic participants are controlled to avoid a conflict with the track of the communicated intended movement of said vehicle.

In a further possible embodiment of the method according to the first aspect of the present invention, each other traffic participant having received the intended movement communicated by said vehicle transmits an acknowledgement back to said vehicle.

In a further possible embodiment of the method according to the first aspect of the present invention, the vehicle initiates the intended movement after having communicated its intended movement to other traffic participants in its surrounding.

In a still further possible embodiment of the method according to the first aspect of the present invention, the vehicle initiates the intended movement after having received acknowledgements from the other traffic participants in its vicinity.

In a still further possible embodiment of the method according to the first aspect of the present invention, the other traffic participants comprise vehicles, bicycles, mobile units carried by pedestrians and/or trains.

In a still further possible embodiment of the method according to the first aspect of the present invention, the intended movement of a vehicle component comprises the intended movement of an actuator controlled by a control unit of said vehicle.

The invention further provides according to a further aspect an apparatus adapted to provide a safe operation of a vehicle comprising the features of claim 15.

The invention provides according to the second aspect an apparatus adapted to provide a safe operation of a vehicle, the apparatus comprising:
a selection unit adapted to select an intended movement of said vehicle and/or an intended movement of at least one component of said vehicle based on images of the vehicle's surrounding captured by at least one camera of said vehicle and
a communication unit adapted to communicate the intended movement to other traffic participants in the vehicle's surrounding.

In the following, possible embodiments of the different aspects of the present invention are described in more detail with reference to the enclosed figures.
- Figure 1: shows a block diagram of a possible exemplary embodiment of an apparatus for providing a safe operation of a vehicle according to an aspect of the present invention;
- Figure 2: shows a schematic diagram for illustrating a traffic situation where the method for safe operation of a vehicle according to the present invention can be applied;
- Figure 3: shows a further schematic diagram for illustrating a further traffic situation where a method for safe operation of a vehicle according to an aspect of the present invention can be applied;
- Figure 4: shows schematically a further situation where a method for safe operation of a vehicle according to the present invention can be applied;
- Figure 5: shows a flowchart for illustrating a possible exemplary embodiment of a method for safe operation of a vehicle according to an aspect of the present invention;
- Figure 6: shows a signaling diagram for illustrating a possible exemplary embodiment of a method for safe operation of a vehicle according to an aspect of the present invention.

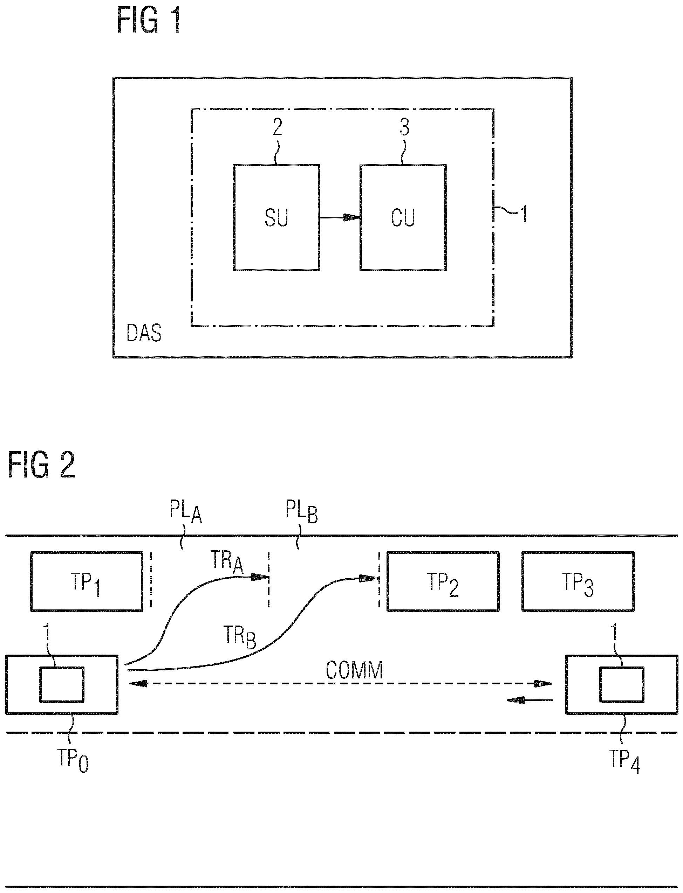

As can be seen in the block diagram of Figure 1, an apparatus 1 for providing a safe operation of a vehicle can comprise in the illustrated exemplary embodiment two main units. The apparatus 1 comprises in the illustrated embodiment a selection unit 2 and a communication unit 3.

The apparatus 1 can be integrated in a driver assistance system DAS of a vehicle such as a car or truck. The selection unit 2 of the apparatus 1 is adapted to select an intended movement of the vehicle and/or an intended movement of at least one component of the vehicle based on images of the vehicle's surrounding captured by at least one camera of the vehicle. The vehicle can comprise at least one vehicle camera adapted to capture images of the vehicle's surrounding. The vehicle cameras can comprise surround view cameras attached to the vehicle's chassis. In a possible embodiment, the vehicle comprises a front camera, a rear camera and two side cameras adapted to capture images of the vehicle's surrounding. The vehicle cameras can provide a stream of digital camera images to an image processing unit. The processed images can be displayed on a display unit of the driver assistance system DAS. The driver of the vehicle can select in a possible embodiment an intended movement of the vehicle such as a parking maneuver based on the captured camera images. For instance, a user can select a desired parking space or parking lot at the side of a street in an urban area. In a possible embodiment, the selection of the intended movement can be performed manually by a user or a driver of the vehicle via a user interface such as a graphical user interface. In a possible embodiment, a user can select an endpoint of the intended movement such as a driving maneuver, in particular a parking maneuver, and a control unit can calculate a track which the vehicle has to take to reach the selected endpoint. In an alternative embodiment, the endpoint of the intended movement can also be selected automatically by a control unit of the vehicle.

The apparatus 1 illustrated in Figure 1 further comprises a communication unit 3 adapted to communicate the intended movement of the vehicle to other traffic participants in the vehicle's surrounding. In a possible embodiment, the communication unit 3 also communicates the calculated track of the intended movement wireless to other traffic participants within the vehicle's surrounding. In a possible embodiment, the intended movement which comprises the calculated track of the intended movement can be communicated wireless via a v2v communication to other traffic participants in the vehicle's surrounding by the communication unit 3 of the apparatus 1. In a still further possible embodiment, the intended movement can also be communicated to other traffic participants in the vehicle's surrounding by generating associated optical signals. These generated optical signals can comprise in a possible implementation visible signals pointed at the selected endpoint and/or track of the intended movement of said vehicle.

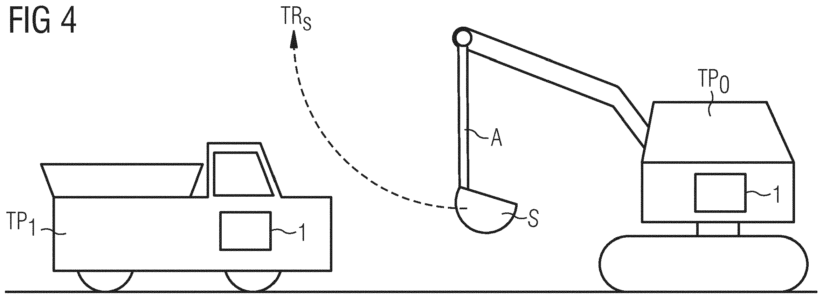

In a possible embodiment, the generated optical signal can also point at a selected endpoint and/or track of at least one component of the vehicle. This component can be a vehicle component such as an actuator. For instance, the vehicle can be an excavator working at a construction site having a hydraulic shovel to dig into the ground. The operator of the excavator can manually or semi-automatically control the intended movement of the shovel arm. The intended movement of the component, i.e. the shovel arm of the excavator, can be communicated by the communication unit 3 to other vehicles working at the same construction site as also illustrated in Figure 4.

Figure 2 shows a traffic situation where the method and apparatus for safe operation of a vehicle can be used. In the illustrated example, a traffic participant TP₀ is equipped with an apparatus 1 as illustrated in Figure 1 comprising a selection unit 2 and a communication unit 3. The traffic participant TP₀ is in the illustrated example a vehicle which is going to perform a parking maneuver into a parking slot. Other traffic participants such as traffic participants TP₁, TP₂, TP₃ shown in the schematic diagram of Figure 2 are already parking at a side lane of a road. The traffic participant TP₀ intends to perform a parking maneuver in one of the two available parking lots PL_{A}, PL_{B} illustrated in Figure 2. The driver of the traffic participant TP₀ may select an endpoint of the intended movement, i.e. parking maneuver, manually via a graphical user interface. For instance, the driver of vehicle TP₀ may select manually a first parking lot PL_{A} or the other available parking lot PL_{B}. In the illustrated example of Figure 2, the other traffic participant TP₄ is also approaching the two available parking lots PL_{A}, PL_{B} from behind. The images of the intended parking lot where the vehicle TP₀ is going to park once the user has selected a parking lot and also the path or track the vehicle is going to take to park can be captured by the vehicle cameras of the vehicle TP₀. In a possible embodiment, the track of the intended movement can be calculated by a processing unit of the driver assistance system DAS. For instance, the parking assistance system DAS of the traffic participant TP₀ can calculate tracks TR of the intended parking maneuver. In case that the driver of the vehicle TP₀ selects parking lot PL_{A} the processing unit can calculate track TR_{A} as shown in Figure 2. In contrast, if the driver decides to use the other parking lot PL_{B} for parking the processing unit can calculate a corresponding track TR_{B} as also shown in Figure 2. The driver of the other traffic participant TP₄ also seeking an available parking lot can receive a communication message from the traffic participant TP₀ informing the traffic participant TP₄ about the intended movement or parking maneuver of the traffic participant TP₀. In a possible embodiment, the intended movement is communicated by the communication unit 3 of the traffic participant TP₀ wireless via a v2v communication to the other traffic participant TP₄. In a possible embodiment, a processed image including the calculated track TR which the traffic participant TP₀ is going to take to park is communicated wireless to the other traffic participant TP₄. Accordingly, a driver of the vehicle TP₄ can see which track TR the traffic participant TP₀ in front of the traffic participant TP₄ is going to take when performing the parking maneuver. In a still further possible embodiment, the information data about the intended track TR of the traffic participant TP₀ can be further processed by a processing unit of the driver assistance system DAS of traffic participants TP₄ and a corresponding track can be overlaid in a surround view image displayed to the driver of traffic participant TP₄ so that the driver of traffic participant TP₄ can see tracks TR_{A} or TR_{B} in its displayed surround view image.

The communicated intended movement of the traffic participant TP₀ also settles the issue which traffic participant can go first to perform the parking maneuver. If the traffic participant TP₀ reaches the available parking lots PL_{A}, PL_{B} before other traffic participants such as traffic participant TP₄ and stops at one of the parking lots to initiate the intended parking maneuver the apparatus 1 can broadcast in a possible embodiment a communication signal or message indicating the intended movement, i.e. parking maneuver, to other traffic participants in the vehicle's surrounding. After having received the broadcasted communication, the other traffic participants can wait until the first traffic participant TP₀ has finished its parking maneuver. Accordingly, conflicts between different traffic participants TP₅ when performing parking maneuvers into available parking lots PL₅ are avoided. Consequently, collisions between traffic participants TP₅ are avoided and the operation safety of the vehicles when performing driving maneuvers is increased.

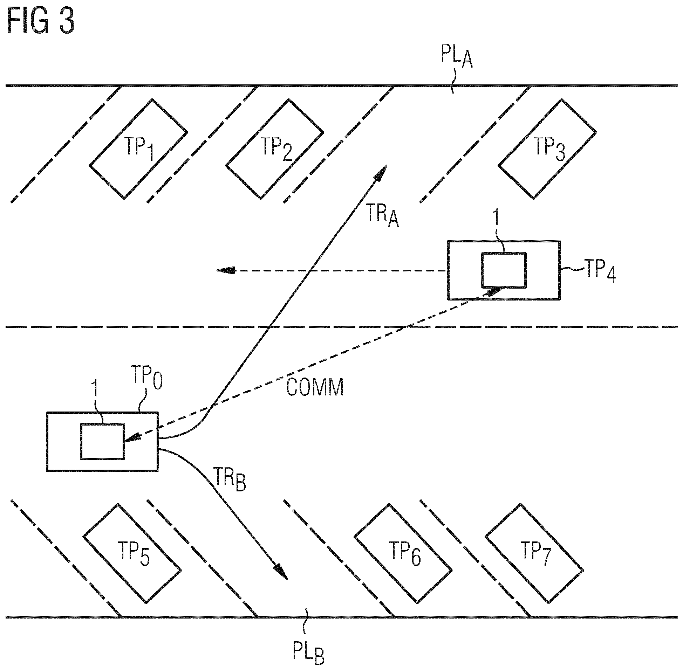

Figure 3 shows a further traffic situation where the method and apparatus 1 for safe operation of a vehicle can be used. In the illustrated example, traffic participant TP₀ applying the apparatus 1 according to the present invention has the choice to park in a first parking lot PL_{A} on the other side of the road or into parking lot PL_{B} on the same side of the road. In the illustrated example, another traffic participant TP₄ is driving in the opposite direction of traffic participant TP₀. In the illustrated example, the track TR_{A} to reach the parking lot PL_{A} intersects with the driving movement of the traffic participant TP₄. Accordingly, in the traffic situation of Figure 3, it would be safer for traffic participant TP₀ to choose parking lot PL_{B} located on the same side of the street. If the user nevertheless selects the other parking lot PL_{A} on the opposite side of the street, the intended parking maneuver can be communicated to the other traffic participant TP₄ approaching in opposite direction on the same road. Further, the communication can include information about the track TR_{A} which traffic participant TP₀ is going to take to reach the available parking lot PL_{A}. The driver assistance system DAS of the other traffic participant TP₄ can evaluate the received data about the intended track TR_{A} to check whether there is a possible conflict and danger of collision. In a possible embodiment, the driver assistance system DAS of the other traffic participant TP₄ may take safety measures to avoid any possible collision with traffic participant TP₀. For instance, if a collision of the two traffic participants might be possible at the current speed of traffic participant TP₄, the driver assistance system of traffic participant TP₄ may change the speed of traffic participant TP₄, i.e. either accelerate or deaccelerate traffic participant TP₄ so that traffic participant TP₄ does not collide with the parking traffic participant TP₀.

Alternatively, it is also possible that traffic participant TP₄ driving on the same road in opposite direction to traffic participant TP₀ can communicate regularly its intended movement, i.e. driving in a straight line on the road by broadcasting corresponding communication messages. These communication messages including the intended movement of traffic participant TP₄ can be received by the driver assistance system DAS of traffic participant TP₀ and evaluated. In the illustrated exemplary traffic scenario of Figure 3, information data indicating the straight movement of traffic participant TP₄ can be taken into account to make a choice between parking lot PL_{A} and the other parking lot PL_{B}. If, for instance, a conflict between the calculated track TR_{A} and the expected linear movement of traffic participant TP₄ is detected, the driver assistance system DAS of traffic participant TP₀ may suggest to the driver of vehicle TP₀ to select the safer parking lot PL_{B} instead of the other parking lot PL_{A}. In a possible implementation, the control unit of the driver assistance system of traffic participant TP₀ may select automatically parking lot PL_{B} as the intended movement of the intended parking maneuver in view of the data received from the other approaching traffic participant TP₄.

In a further possible embodiment, the intended movement of a traffic participant may be communicated to other traffic participants TP₅ in the vehicle's surrounding also by generating associated optical signals. The generated optical signals can comprise visible signals pointed at the selected endpoint and/or along the track TR of the intended movement of the vehicle. For instance, if the other traffic participant TP₄ is not v2v enabled, traffic participant TP₀ can communicate its intended movement or parking maneuver generating associated optical signals. For instance, the vehicle can comprise light pointers adapted to generate an infrared, red or green light which may be mounted along with the surround view cameras on all sides of the vehicle's chassis. This generated light can be pointed onto a selected parking slot or parking lot so that other drivers and/or sensors of other traffic participants can see or detect it. A driver of another traffic participant such as traffic participant TP₄ can either wait or select another parking lot or the driver may initiate a detour to move forward. The traffic participant TP₀ can send in a possible embodiment communication messages to other vehicles in its surrounding informing the other traffic participants TP₅ about where and how he is going to park.

Figure 4 shows schematically a further use case of the method and apparatus for performing a safe operation of a vehicle.

In the illustrated embodiment of Figure 4, the vehicle or traffic participant TP₀ is taking part in the traffic at a construction site. The vehicle TP₀ can be for instance an excavator comprising an arm A operating a shovel S. An operator of the excavator can control the movement of the shovel. The intended movement or track TR_{S} of the shovel as illustrated in Figure 4 can be communicated to another traffic participant TP₁ working at the same construction site. In the illustrated example, the other traffic participant TP₁ is a truck for transporting excavated earth. Traffic participant TP₀, i.e. the excavator, can communicate the intended movement of at least one of its component, i.e. the actuator consisting of the arm A and the shovel S to the other traffic participant TP₁ in the vehicle's surrounding. In the illustrated embodiment, the driver of the truck TP₁ can avoid in this way track TR_{S} of the shovel. The movement of the other traffic participant TP₁ can be either controlled by the driver of the truck or semi-automatically by a driver assistance system of the truck TP₁. The excavator TP₀ can broadcast periodically or even continuously communication messages indicating the intended movement of its actuator including data about the track TR_{S} to be expected. Other traffic participants TPᵢ in the vicinity of the excavator TP₀ receiving the communication messages evaluate the received data and take measures to avoid collisions with the actuator of TP₀, if necessary. For instance, the driver assistance system of the truck TP₁ may move automatically the truck TP₁ to avoid a collision with the track TR_{S} indicated by the track data within the received communication message. In an alternative embodiment, the driver assistance system 1 of the other traffic participant TP₁ may send a warning message to the driver assistance system of the excavator TP₀ in case that the calculated track TR_{S} of the shovel collides with the vehicle chassis of the other traffic participant TP₁. In this embodiment, the control unit of the excavator may not initiate the intended movement of the shovel or stop the movement of the shovel along the track TR_{S} if it has already been initiated. As can be seen from the example of Fig. 4, the operation of machines or vehicles at a construction site becomes safer when using the apparatus and method according to the present invention. Earth movers working at a construction site can share information data how they intend to move their levers and in which path or track so that the vehicles nearby can avoid the moved actuator of the earth mover. The vehicle comprising an actuator or a movable component can also comprise means for generating associated optical signals indicating an intended movement of the respective component or actuator. In a possible embodiment, the optical signals may comprise visible signals pointed at the selected endpoint and/or track TR of the moveable actuator component of the respective vehicle. For instance, in the illustrated example of Figure 4, the selected endpoint could be a point at ground level where the shovel S of the excavator is going to dig. The pointer of the traffic participant TP₀, i.e. the excavator, may point at the selected endpoint where the shovel S is going to dig so that other vehicles in the vicinity of the excavator can avoid this location. In a possible embodiment, the vehicle, i.e. the traffic participant TP₀, can also send coordinates of the endpoint of the intended movement automatically to other traffic participants in its vicinity so that the other traffic participants can avoid this position automatically.

In a possible embodiment, the other traffic participants TP₅ in the vicinity of the vehicle TP₀ can be detected automatically by the DAS of vehicle TP₀ by processing the images captured by the vehicle cameras of the vehicle TP₀. In the illustrated exemplary scenarios of Figures 1, 2, 3, 4, the surround view camera images can be processed by an image processing unit of the driver assistance system DAS of traffic participant TP₀ to detect the other traffic participants TPⱼ in its surrounding automatically. The communication unit 3 of the apparatus 1 can then communicate an intended movement of the vehicle TP₀, e.g. a parking maneuver, or an intended movement of at least one component of the vehicle, e.g. movement of the shovel S of the excavator 1 in Fig. 4, to the detected other traffic participants. Accordingly, in this embodiment, the captured images of the vehicle's surrounding are not only used for performing the selection of the intended movement of the vehicle but also for detecting other traffic participants TP₅ in the vehicle's surrounding. The captured images of the vehicle's surrounding can also be used for calculating the tracks TR of the other detected traffic participants TP₅. The calculated tracks TR₅ of the other traffic participants can be compared with the calculated track TR of the intended movement, e.g. parking maneuver, to check whether there is a potential conflict between the tracks. If a conflict is detected the intended movement, e.g. parking maneuver, is not initiated or interrupted after it has been initiated.

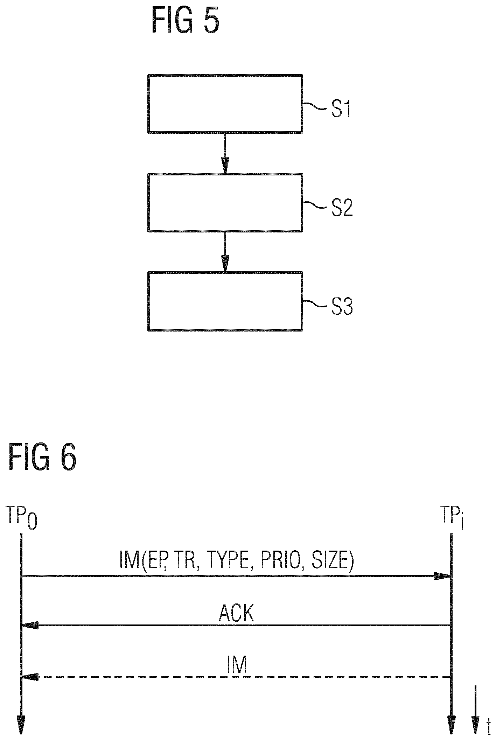

Figure 5 shows a flowchart of a possible exemplary embodiment of a method for safe operation of a vehicle according to an aspect of the present invention.

In a first step S1, images of the vehicle's surrounding are captured by at least one camera of the vehicle. These cameras can comprise for instance surround view cameras of a surround view system.

In a further step S2, the intended movement of the vehicle can be selected. The selection can be performed either manually by a user via a user interface and/or automatically by a control unit of the vehicle. The selection of the intended movement of the vehicle in step S2 is performed based on the camera images captured in step S1. The captured images can be either displayed on a display unit to a user which performs a selection of the intended movement manually via a graphical user interface. In an alternative embodiment, the captured images can be processed by a control unit of the vehicle for automatic selection of an intended movement or a track TR depending on the current traffic situation.

In a further step S3, the intended movement is communicated to other traffic participants in the vehicle's surrounding. The intended movement can be communicated in step S3 in a possible embodiment wireless via v2v communication to other traffic participants TP₅ in the vehicle's surrounding. In an alternative embodiment, the intended movement can also be communicated to other traffic participants TP₅ in the vehicle's surrounding by generating associated optical signals, for instance by signal pointer units of the vehicle. In a still further possible embodiment, the intended movement is communicated both wireless via v2v communication and simultaneously by generating associated optical signals.

Figure 6 shows a signaling diagram for illustrating a possible exemplary embodiment of the method for safe operation of a vehicle according to the present invention. In the illustrated embodiment, a vehicle of traffic participant TP₀ communicates the intended movement IM of the traffic participant TP₀ to at least one other traffic participant TPᵢ in its surrounding. The intended movement communicated by the communication unit 3 of traffic participant TP₀ can comprise data of the endpoint EP and/or track TR of the intended movement. After having received the intended movement message, the other traffic participant TPᵢ can transmit an acknowledgement signal ACK back to the traffic participant TP₀ as illustrated in Figure 6. In a possible embodiment, the vehicle TP₀ initiates the intended movement after having communicated its intended movement by transmitting a corresponding intended movement message IM as shown in Figure 6. In an alternative embodiment, the vehicle TP₀ initiates its intended movement only after having received acknowledgement signals ACK from the other traffic participants TP₅ in its vicinity. In a possible embodiment, the vehicle TP₀ waits to receive acknowledgement signals from all other traffic participants TP₅ within a specific range around the vehicle TP₀. Only after having received the acknowledgement signals or acknowledgement messages, the traffic participant TP₀ will initiate the intended movement such as a parking maneuver. In a possible embodiment, the acknowledgement messages ACK may comprise additional data including the position and/or velocity of the other traffic participant TP₅.

The other traffic participants TP₅ can comprise other vehicles but also other traffic participants such as bicycles, trains or even mobile units carried by pedestrians. The method for safe operation as illustrated in the flowchart of Figure 5 in the signaling diagram of Figure 6 can be implemented in a semi-automatic or fully-automatic parking assistance system of a vehicle such as a car or a truck. It may be also implemented in a control system of a construction machine as illustrated in Figure 4. The intended movement can comprise the movement of the whole vehicle but also the movement of at least one movable component of the respective vehicle. This component may comprise an actuator of the vehicle such as a robot arm or a shovel but also other components of a vehicle such as a trailer of a vehicle. In a further possible embodiment, the intended movement message IM may include additional data indicating for instance the kind or type (TYPE) of the intended movement. The intended movement message IM may comprise the indication about the class or type of the intended movement such as a parking maneuver. For instance, the indication message can indicate that the intended movement is a parking maneuver. Other types of intended movements are possible, for instance a U-turn on a street or a reverse movement. By receiving such a communication message indicating the intended movement, the intent of the traffic participant TP₀ is conveyed to other traffic participants.

The method and apparatus according to the present invention allow for an easy arbitration between different traffic participants TP₅ for performing parking maneuvers in a limited number of parking lots.

In a further possible embodiment, the captured images provided by the vehicle cameras can be further processed to determine the size of a parking lot PL. In the illustrated scenario of Figure 2, the size of the parking lot PL_{A} can be sufficient for a traffic participant TP₀ whereas the size of the other parking lot PL_{B} might be not sufficient for the size of the vehicle chassis of traffic participant TP₀. In this example, the driver assistance system DAS of traffic participant TP₀ can automatically select parking lot PL_{A} to perform the parking maneuver and communicate track TR_{A} to the other traffic participant TP₄. In a possible embodiment, arbitration between two traffic participants TP₀, TP₄ may take place based on exchanged communication messages including information about the intended movements or intended driving maneuvers of the traffic participants TP₅. For example, in the illustrated example of Figure 2, the parking lot PL_{A} may have the correct size for vehicle TP₀ and the other parking lot PL_{B} may have the sufficient size for the other traffic participant TP₄. In an exemplary embodiment, the two driver assistance systems of the two traffic participants TP₀, TP₄ can perform an arbitration process where parking lot PL_{A} is assigned to traffic participant TP₀ and the other parking lot PL_{B} is assigned to traffic participant TP₄. This embodiment has the additional advantage that the available parking space within an urban area can be used efficiently. In the arbitration, two vehicles TP₀, TP₄ can even exchange data indicating the size (SIZE) of the respective vehicle chassis to the other traffic participants. For instance, the first traffic participant TP₀ comprises a length of 3 m whereas the other traffic participant TP₄ has a length of 5 m. The distance between the already parking traffic participants TP₁, TP₄ might be 10 m, i.e. two parking lots each having a length of 5 m. In the illustrated scenario of Fig. 2, track TR_{A} for the first parking maneuver of traffic participant TP₀ into parking lot PL_{A} can be calculated such that the shorter traffic participant TP₀ leaves sufficient remaining space for the other traffic participant TP₄ parking then behind traffic participant TP₀ in parking lot PL_{B}. In this embodiment, two traffic participants TP₅ can coordinate both parking maneuvers to exploit the available space between the already parking traffic participants TP₁, TP₂ optimally. In this embodiment, a bidirectional v2v communication between these two traffic participants TP₀, TP₄ takes place where the intended movements of the different traffic participants are exchanged to exploit the available parking space efficiently and guaranteeing at the same time safe operation of all participating vehicles to avoid a conflict.

In a still further possible exemplary embodiment, the intended movement messages IM exchanged between the different traffic participants can also include priorities (PRIO) between the different traffic participants. For instance, the driving maneuver or the parking maneuver of a vehicle belonging to a disabled person can comprise a higher priority than driving maneuvers of other traffic participants. In this situation when two traffic participants compete for the same available parking lot they may exchange communication messages indicating the intended movement comprising information about the different priorities so that the vehicle having the higher priority may be allowed to perform the parking maneuver to occupy the only available parking lot whereas the other vehicle with a lower priority will not be allowed to park in the parking lot.

Further embodiments of the method and apparatus according to the present invention are possible. In a further possible embodiment, the different traffic participants TP₅ can also communicate in an intended movement message IM that they will not move. In this embodiment, the intended movement is to stay fixed at the current position or location. For instance, the traffic participant TP₀ in Figure 2 may indicate that its intended movement is to stay where it is momentarily located, i.e. in the middle of the lane on which the other traffic participant TP₄ is driving. For instance, a huge truck or lorry delivering goods may wish to park in the traffic lane of the road where no free parking lots or parking spaces are available. The intended movement selected by the driver of the truck or lorry is then to stay where the truck is currently driving. The type or class (TYPE) of this intended movement is to stay fixed. This movement type can also be notified to other traffic participants TP₅ in the vehicle's surrounding. In the example of Figure 2, traffic participant TP₀ may communicate to the other traffic participants that its intention is to stay fixed, i.e. that it will not use the available parking lots PL_{A}, PL_{B}, for instance because they are too small for traffic participant TP₀. In this situation, the approaching traffic participant TP₄ is informed that the other traffic participant TP₀ will not perform a parking maneuver so that traffic participant TP₄ can directly park in one of the parking lots PL_{A}, PL_{B} without being in danger of colliding with the huge traffic participant TP₀ standing in front of parking traffic participant TP₁.

In a still further possible exemplary embodiment of the method and apparatus for safe operation according to the present invention, additional information can be exchanged and used for providing safe operation, in particular during parking maneuvers. In a possible embodiment, the blinking or turn light signals of other traffic participants TP₅ are also evaluated and considered to decide whether the other traffic participant is going to perform an intended movement such as performing a parking maneuver or turning into another road.

## Claims

1. A method for safe operation of a vehicle comprising the steps of:
(a) capturing images (S1) of the vehicle's surrounding by at least one camera of said vehicle;
(b) selecting (S2) an intended movement of said vehicle or an intended movement of at least one component of said vehicle based on the captured images; and
(c) communicating (S3) the intended movement to other traffic participants in the vehicle's surrounding.

2. The method according to claim 1 wherein the intended movement is communicated wireless via vehicle to vehicle, v2v, communication to other traffic participants in the vehicle's surrounding.

3. The method according to claim 1 or 2 wherein the intended movement is communicated to other traffic participants in the vehicle's surrounding by generating associated optical signals.

4. The method according to any of the preceding claims 1 to 3 wherein a track of the intended movement is communicated to the other traffic participants.

5. The method according to any of the preceding claims 1 to 4 wherein an endpoint of the intended movement is selected manually by a user via a user interface or selected automatically by a control unit of said vehicle.

6. The method according to claim 1 wherein the endpoint of the intended movement is a parking lot selected manually or automatically on the basis of the captured images of the vehicle's surrounding.

7. The method according to claim 3 wherein the generated optical signals comprise visible signals pointed at the selected endpoint and/or pointed at a track of the intended movement of said vehicle and/or pointed at the selected endpoint of at least one component of said vehicle.

8. The method according to any of the preceding claims wherein the captured images are processed to detect other traffic participants in the vehicle's surrounding and/or to detect tracks (TR) of other traffic participants.

9. The method according to claim 8 wherein a track of the intended movement of said vehicle is communicated to each detected other traffic participant in its surrounding.

10. The method according to claim 9 wherein the other traffic participants are controlled to avoid a conflict with the track of the communicated intended movement of said vehicle.

11. The method according to any of the preceding claims 1 to 10 wherein each other traffic participant having received the intended movement communicated by said vehicle transmits an acknowledgement (ACK) back to said vehicle.

12. The method according to any of the preceding claims 1 to 11 wherein said vehicle initiates the intended movement after having communicated its intended movement to the other traffic participants in its surrounding and/or after having received acknowledgements from the other traffic participants in its vicinity.

13. The method according to any of the preceding claims 1 to 12 wherein the other traffic participants comprise vehicles, bicycles, mobile units carried by pedestrians and/or trains.

14. The method according to any of the preceding claims 1 to 13 wherein the intended movement of a vehicle component comprises the intended movement of an actuator controlled by a control unit of said vehicle.

15. An apparatus adapted to provide a safe operation of a vehicle,
the apparatus (1) comprising:
(a) a selection unit (2) adapted to select an intended movement of said vehicle and/or an intended movement of at least one component of said vehicle based on images of the vehicle's surrounding captured by at least one camera of said vehicle; and
(b) a communication unit (3) adapted to communicate the intended movement to other traffic participants in the vehicle's surrounding.
